# EUROPÄISCHE PATENTANMELDUNG

(11) **EP 3 913 335 A1**
(43) Veröffentlichungstag der Anmeldung: **24.11.2021**
(21) Anmeldenummer: 21172515.5
(22) Anmeldetag: 06.05.2021
(51) Int. Cl.: G01F 23/284, G01S 13/00, G01F 22/00

(54) **VERFAHREN ZUM BESTIMMEN DER SCHÜTTGUTMENGE IN EINEM STEHENDEN BEHÄLTER**

(30) Priorität: 20.05.2020 AT 504482020
(71) Anmelder: Rosenberger Telematics GmbH, 4850 Timelkam (AT)
(72) Erfinder: Hammer, Arthur, 83413 Fridolfing (DE); Floth, Klaus, 5141 Moosdorf (AT)
(74) Vertreter: Hübscher & Partner Patentanwälte GmbH

(57) **Zusammenfassung**

Es wird ein Verfahren zum Bestimmen der Schüttgutmenge in einem stehenden Behälter (1) beschrieben, der einen bodenseitigen Austragstrichter (3) bildet und im Deckenbereich einen gegenüber dem Austragstrichter (3) ausgerichteten Füllstandsensor (5) aufweist, wobei der Abstand zwischen der Schüttgutoberfläche und dem Füllstandsensor (5) durch Bestimmung der Laufzeit von an der Schüttgutoberfläche reflektierten, hochfrequenten Messignalen gemessen und mithilfe der gemessenen Abstände die Schüttgutmenge im Behälter (1) anhand von abgespeicherten Daten der Behälterabmessungen berechnet wird. Um einfache Verfahrensbedingungen sicherzustellen, wird vorgeschlagen, dass zur Bestimmung einer durch eine entnahmebedingte Ausbildung einer trichterförmigen Schüttgutsenke (10) definierten Schüttgutrestmenge (11) der Abstand des Bodens (12) der Schüttgutsenke (10) vom Füllstandsensor (5) gemessen und die Schüttgutrestmenge (11) im Behälter (1) anhand der abgespeicherten Daten der Behälterabmessungen sowie des Schüttwinkels (a) des Schüttguts (7) berechnet wird.

## Beschreibung

Die Erfindung bezieht sich auf ein Verfahren zum Bestimmen der Schüttgutmenge in einem stehenden Behälter, der einen bodenseitigen Austragstrichter bildet und im Deckenbereich einen gegenüber dem Austragstrichter ausgerichteten Füllstandsensor aufweist, wobei der Abstand zwischen der Schüttgutoberfläche und dem Füllstandsensor durch Bestimmung der Laufzeit von an der Schüttgutoberfläche reflektierten, hochfrequenten Messsignalen gemessen und mithilfe der gemessenen Abstände die Schüttgutmenge im Behälter anhand von abgespeicherten Daten der Behälterabmessungen berechnet wird.

Bei der Bestimmung der jeweiligen Füllmenge von Schüttgütern in Behältern ergibt sich die Schwierigkeit, dass die Schüttgutoberfläche sehr unterschiedlich ausfallen kann und beim Füllen eines stehenden Behälters einen Schüttkegel bildet, der sich mit zunehmender Schüttgutentnahme zu einer trichterförmigen Schüttgutsenke wandelt. Mit einem asymmetrischen Verlauf der Schüttgutoberfläche ist außerdem zu rechnen, wenn ein mit Schüttgut gefüllter Behälter aus einer liegenden Transportstellung in eine stehende Arbeitsstellung aufgerichtet wird. Um diese unterschiedlichen Ausgestaltungen der Schüttgutoberfläche mit Hilfe von Füllstandsensoren erfassen und für die Bestimmung der jeweiligen Schüttgutmenge auswerten zu können, werden Füllstandsensoren eingesetzt, die den Abstand zwischen der Schüttgutoberfläche und dem Füllstandsensor durch Bestimmung der Laufzeit von an der Schüttgutoberfläche reflektierten, hochfrequenten Messsignalen messen. Unter der Voraussetzung, dass solche Abstandsmessungen über die Schüttgutoberfläche verteilt vorgenommen werden, kann in einer Annäherung ein räumliches Abbild der Schüttgutoberfläche erfasst werden, allerdings mit dem Nachteil eines erheblichen Aufwands, weil beispielsweise mehrere Sender und Empfänger für die hochfrequenten Messsignale oder verstellbare Füllstandsensoren eingesetzt werden müssen, um auswertbare, über die Schüttgutoberfläche verteilte Abstandsinformationen zu erhalten.

Um diesen Aufwand zu vermeiden ist es schließlich bekannt (EP 2 128 576 A1), Füllstandsensoren mit einem Abstrahlwinkel einzusetzen, der die Erfassung eines Reflexionsprofils der gesamten Schüttgutoberfläche erlaubt, um anhand des Reflexionsprofils nicht nur bestimmen zu können, ob ein Schüttkegel oder eine trichterförmige Senke vorliegt, sondern auch die Höhe des Schüttgutkegels bzw. die Tiefe der Senke zu erfassen. Mit der Erfassung der Oberflächenform des Schüttguts und den Abstandsinformationen lässt sich unter Berücksichtigung der bekannten Abmessungen des Behälters das vom Schüttgut im Behälter eingenommene Volumen und daraus mit der bekannten Dichte das Gewicht des Schüttguts im Behälter berechnen. Nachteilig ist allerdings, dass mithilfe des erfassten Reflexionsprofils insbesondere die Abstandsdaten nicht mit der gewünschten Genauigkeit bestimmt werden können, sodass ein weiterer Füllstandsensor mit einer gebündelten Abstrahlung zum Einsatz kommt, wodurch der Aufwand wieder vergrößert wird.

Der Erfindung liegt somit die Aufgabe zugrunde, ein Verfahren zum Bestimmen der Schüttgutmenge in einem Behälter so auszugestalten, dass in vergleichsweise wenig aufwendiger Art die für den Benützer eines solchen Behälters maßgebenden Informationen über die Schüttgutmenge im Behälter mit ausreichender Genauigkeit zur Verfügung gestellt werden können.

Ausgehend von einem Verfahren der eingangs geschilderten Art löst die Erfindung die gestellte Aufgabe dadurch, dass zur Bestimmung einer durch eine entnahmebedingte Ausbildung einer trichterförmigen Schüttgutsenke definierten Schüttgutrestmenge der Abstand des Bodens der Schüttgutsenke vom Füllstandsensor gemessen und die Schüttgutrestmenge im Behälter anhand der abgespeicherten Daten der Behälterabmessungen sowie des Schüttwinkels des Schüttguts berechnet wird.

Die Erfindung geht von der Erkenntnis aus, dass es für die Bewirtschaftung eines Behälters zur Bevorratung von wiederholt aus dem Behälter ausgetragenen Schüttgutmengen maßgeblich ist, zuverlässig mit hinreichender Genauigkeit eine Schüttgutrestmenge zu erfassen, die das Nachfüllen von Schüttgut erforderlich macht. Unter der Voraussetzung eines zunächst weitgehend gefüllten Behälters bildet sich im Schüttgut mit fortschreitendem Schüttgutaustrag durch den bodenseitigen Austragstrichter zunehmend eine zum Behälter koaxiale trichterförmige Senke aus, die durch den Schüttwinkel des Schüttguts bestimmt wird und sich in ihren Abmessungen nicht mehr ändert, wenn sich die Senke über den gesamten Umfang bis zum Behältermantel erstreckt. Bei einer sich bis zum Behältermantel erstreckenden, trichterförmigen Schüttgutsenke ist somit das Schüttgutvolumen durch die Höhenlage des Bodens der Schüttgutsenke aufgrund der bekannten Abmessungen des Behälters eindeutig bestimmt. Dieses Schüttgutvolumen wird ja durch das durch die Schüttgutsenke begrenzte Behältervolumen bestimmt und kann daher aus den Daten der Behälterabmessungen, der Größe des Schüttwinkels und der Höhenlage des Bodens der Schüttgutsenke berechnet werden. Da die Lage des Bodens der Schüttgutsenke in Bezug auf die Behälterhöhe mithilfe des Füllstandsensors insbesondere bei einer gebündelten Abstrahlrichtung der Messsignale über den Abstand dieses Senkebodens vom deckenseitigen Füllstandsensor mit einer guten Auflösung erfasst wird und sich der jeweilige Schüttwinkel des Schüttguts in einem vergleichsweise engen Toleranzbereich vorgeben lässt, gibt das auf diese Weise berechnete Schüttgutvolumen die Schüttgutrestmenge mit einer insbesondere für eine Gewichtsbestimmung ausreichenden Genauigkeit wieder.

Wie sich aus obigen Ausführungen ergibt, kann die Schüttgutmenge im Behälter mit einer vergleichsweise hohen Genauigkeit dann ermittelt werden, wenn sich eine über den gesamten Behälterquerschnitt erstreckende Schüttgutsenke ausgebildet hat. Da die Ausbildung einer solchen trichterförmigen Senke von der aus dem Schüttgutbehälter entnommenen Schüttgutmenge abhängt und im Allgemeinen davon ausgegangen werden kann, dass der Behälter zunächst weitgehend gefüllt ist, kann angenommen werden, dass sich nach einem bestimmten, entnahmebedingten Absinken des Schüttguts eine entsprechende Schüttgutsenke ausgebildet hat. Ein diesem Absinken entsprechender, vom Füllstandsensor gemessener Abstand kann somit als Mindestabstand für die genaue Berechnung der Schüttgutrestmenge herangezogen werden, die dann laufend überwacht werden kann, bis ein für das Auffüllen des Behälters vorgesehener Schwellwert der Schüttgutrestmenge unterschritten wird. Die Ausbildung einer sich über den Behälterquerschnitt erstreckenden, trichterförmigen Schüttgutsenke liegt unter den gegebenen Voraussetzungen sicher vor, wenn der durch den Füllstandsensor gemessene Abstand der Behälterhöhe zwischen dem Austragstrichter und dem Füllstandsensor entspricht.

Bei einem gemessenen Abstand des Füllstandsensors kleiner als der für die vollständige Ausbildung einer Schüttgutsenke vorgegebene Mindestabstand können auf der Basis der gemessenen Abstände keine Aussagen über den Oberflächenverlauf des Schüttguts gemacht werden, weil dieser Oberflächenverlauf z. B. davon abhängt, ob der Behälter vor oder nach seiner Aufstellung mit Schüttgut befüllt wurde. Bei einer Befüllung des stehenden Behälters ergibt sich nämlich ein Schüttkegel, während beim Aufrichten eines bereits gefüllten Behälters eine gegen die Aufrichtseite hin abfallende, asymmetrische Schüttgutoberfläche zu erwarten ist. Um trotzdem verwertbare Aussagen über die jeweilige Schüttgutmenge mithilfe der gemessenen Abständen des Füllstandsensors machen zu können, kann die Berechnung der Schüttgutmenge außerhalb des durch die Schüttgutrestmenge mit der ausgeprägten Senke bestimmten Bereichs in Abhängigkeit von einer Behälterbewegung nach der Füllung des Behälters mit Schüttgut mittels der durch den Füllstandsensor gemessenen Abstände anhand der Daten der Behälterabmessungen, des Schüttwinkels und eines abgespeicherten, auf Messabstände bezogenen Verlaufs der Oberflächenform des Schüttguts während des Schüttgutaustrags erfolgen. Da bei einer vorgegebenen Ausgangsform der Schüttgutoberfläche die Änderung des Oberflächenverlaufs mit zunehmendem Schüttgutaustrag bei einer gegebenen Behälterform aufgrund der physikalischen Gesetzmäßigkeiten weitgehend voraussehbar ist, können auf der Basis eines entsprechenden Kennfeldes der sich ändernden Oberflächenverläufe die jeweiligen Schüttgutmengen in Abhängigkeit von den durch den Füllstandsensor gemessenen Abständen zumindest annähernd bestimmt werden.

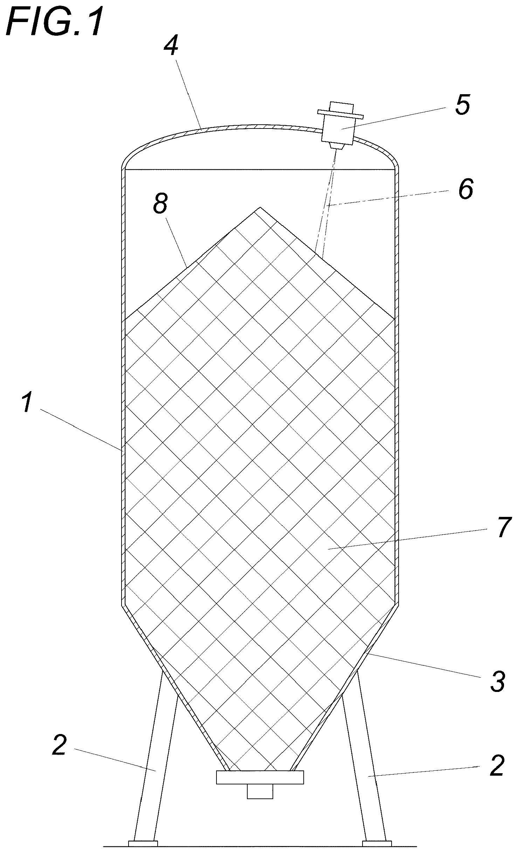

Anhand der Zeichnung wird das erfindungsgemäße Verfahren näher erläutert. Es zeigen die
- Fig. 1 bis 3: einen zur Durchführung des erfindungsgemäßen Verfahrens vorgesehenen Behälter für Schüttgut in drei unterschiedlichen Stadien der Befüllung mit Schüttgut.

Der schematisch dargestellte, üblicherweise zylindrische Behälter 1 ruht gemäß dem Ausführungsbeispiel auf Stützen 2 und ist mit einem Austragstrichter 3 versehen. In der Decke 4 des Behälters 1 ist ein Füllstandsensor 5 mit einer entsprechenden Auswerteeinrichtung angeordnet, die vorzugsweise mit einem Sender zur Übermittlung von Mess- und Auswertedaten ausgerüstet ist. Der Füllstandsensor 5 ist gegenüber dem Austragstrichter 3 ausgerichtet und sendet einen gebündelten Strahl 6 hochfrequenter Messsignale, z. B. Radarwellen, die an der Oberfläche des im Behälter 1 befindlichen Schüttguts 7 reflektiert und wieder empfangen werden, um aus der Laufzeit der gesendeten und reflektierten Messsignale den Abstand zwischen dem Füllstandsensor 5 und der Schüttgutoberfläche im Auftreffbereich des Strahls 6 zu bestimmen.

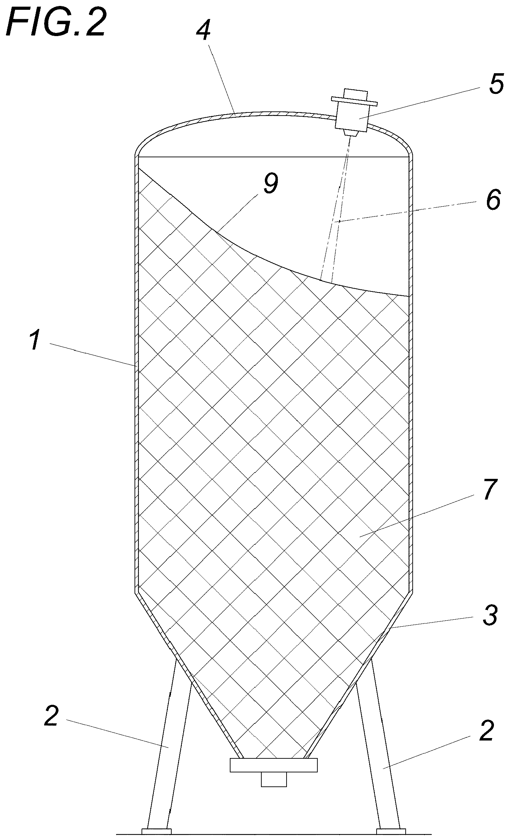

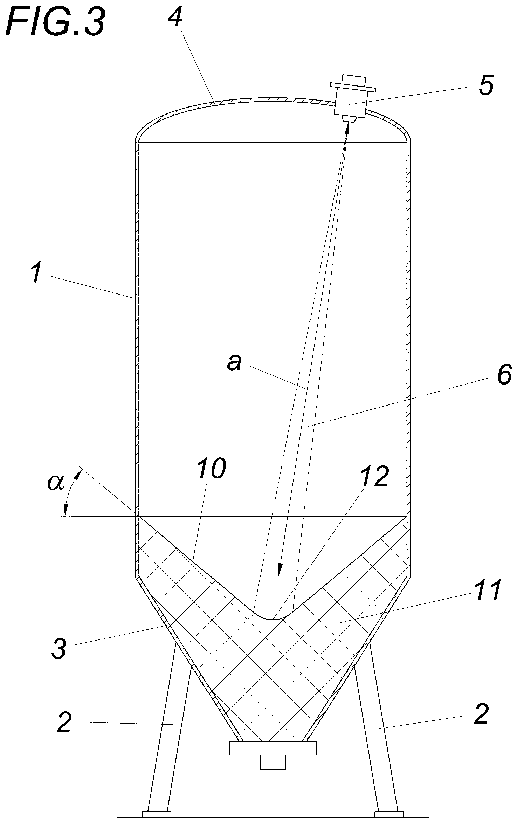

Wie in den Fig. 1 und 2 angedeutet ist, kann das Schüttgut 7 im weitgehend gefüllten Behälter 1 einen sehr unterschiedlichen Oberflächenverlauf aufweisen. Wird der Behälter 1 stehend mit Schüttgut 7 befüllt, so bildet sich ein Schüttkegel 8 aus, wie dies in der Fig. 1 veranschaulicht ist. Wird jedoch beispielsweise der liegend transportierte, befüllte Behälter aufgerichtet, so stellt sich eine asymmetrische gegen die Aufrichtseite abfallende Schüttgutoberfläche 9 entsprechend der Fig. 2 ein. Unabhängig vom Oberflächenverlauf des Schüttguts 7 des befüllten Behälters 1 bildet sich mit fortschreitender Schüttgutentnahme zunehmend eine trichterförmige Schüttgutsenke 10 aus, deren Durchmesser sich allmählich auf den Durchmesser des Behälters 1 ausdehnt, wie dies der Fig. 3 entnommen werden kann. Die sich über den vollen Querschnitt des Behälters 1 erstreckende Schüttgutsenke 10 wird geometrisch einerseits durch den Schüttwinkel α des Schüttguts 7 und anderseits durch den Behälterquerschnitt eindeutig bestimmt und kann daher der Berechnung einer Schüttgutrestmenge 11 mit einem Oberflächenverlauf entsprechend der Schüttgutsenke 10 anhand der bekannten Daten der Behälterabmessungen und des mithilfe des Füllstandsensors 5 gemessenen Abstands des Bodens 12 der Schüttgutsenke 10 vom Füllstandsensor 5 berechnet werden. Mit dem vom Füllstandsensor 5 gemessenen Abstand des Bodens 12 der Schüttgutsenke 10 ist ja die Höhe dieses Bodens 12 in Bezug auf den Behälter 1 bestimmt, sodass sich das Behältervolumen unterhalb der durch den Schüttguttrichter 10 definierten Schüttgutoberfläche berechnen lässt, was mit der bekannten Dichte des Schüttguts unter einer allfälligen Berücksichtigung eines Füllfaktors unmittelbar zum Gewicht der Schüttgutrestmenge 11 führt.

Voraussetzung für diese Berechnung der Schüttgutrestmenge 11 ist, dass sich die Schüttgutsenke 10 über den gesamten Querschnitt des Behälters 1 erstreckt. Um dies sicherzustellen, muss eine entsprechende Schüttgutmenge aus dem Behälter 1 ausgetragen werden, also ein bestimmter Mindestabstand durch den Füllstandsensor 5 angezeigt werden. Bei einer Überschreitung dieses Schwellwertes kann dann davon ausgegangen werden, dass die berechneten Schüttgutrestmengen mit guter Genauigkeit den tatsächlichen Schüttgutrestmengen 11 entsprechen. Wird dieser Schwellwert mit dem Abstand a der oberen Trichteröffnung des Austragstrichters 3 festgelegt, so wird den üblichen Randbedingungen in diesem Zusammenhang vorteilhaft entsprochen.

Da es im Allgemeinen darauf ankommt, dass jene Schüttgutrestmenge 11 möglichst genau erfasst wird, die ein Nachfüllen des Schüttguts 7 bedingt, bietet das erfindungsgemäße Verfahren eine einfache und sichere Überwachung dieser Schüttgutrestmenge 11. Sollen jedoch auch Schüttgutmengen oberhalb dieser Schüttgutrestmengen erfasst werden, so gibt es zur Berücksichtigung der unterschiedliche Oberflächenverläufe die Möglichkeit, ausgehend von einem Schüttkegel 8 nach Fig. 1 oder einem asymmetrischen Oberflächenverlauf 9 nach Fig. 2 den sich mit zunehmendem Messabstand zum Füllstandsensor 5 aufgrund bestimmter Gesetzmäßigkeiten vorhersehbar ändernden Oberflächenverlauf beispielsweise in einem Kennlinienfeld abzuspeichern und den in Abhängigkeit vom Messabstand abgespeicherten Oberflächenverlauf zur Berechnung der jeweiligen Schüttgutmenge im Behälter 1 heranzuziehen.

## Patentansprüche

1. Verfahren zum Bestimmen der Schüttgutmenge in einem stehenden Behälter (1), der einen bodenseitigen Austragstrichter (3) bildet und im Deckenbereich einen gegenüber dem Austragstrichter (3) ausgerichteten Füllstandsensor (5) aufweist, wobei der Abstand zwischen der Schüttgutoberfläche und dem Füllstandsensor (5) durch Bestimmung der Laufzeit von an der Schüttgutoberfläche reflektierten, hochfrequenten Messsignalen gemessen und mithilfe der gemessenen Abstände die Schüttgutmenge im Behälter (1) anhand von abgespeicherten Daten der Behälterabmessungen berechnet wird, **dadurch gekennzeichnet, dass** zur Bestimmung einer durch eine entnahmebedingte Ausbildung einer trichterförmigen Schüttgutsenke (10) definierten Schüttgutrestmenge (11) der Abstand des Bodens (12) der Schüttgutsenke (10) vom Füllstandsensor (5) gemessen und die Schüttgutrestmenge (11) im Behälter (1) anhand der abgespeicherten Daten der Behälterabmessungen sowie des Schüttwinkels (a) des Schüttguts (7) berechnet wird.

2. Verfahren nach Anspruch 1, **dadurch gekennzeichnet, dass** die Schüttgutmenge im Behälter (1) anhand der durch die Ausbildung einer trichterförmigen Schüttgutsenke (10) definierte Schüttgutrestmenge (11) berechnet wird, wenn der gemessene Abstand zwischen der Schüttgutoberfläche und dem Füllstandsensor (5) einen vorgegebenen, die Ausbildung einer sich über den gesamten Behälterquerschnitt erstreckenden Schüttgutsenke (10) sichernden Mindestabstand (a) überschreitet.

3. Verfahren nach Anspruch 2, **dadurch gekennzeichnet, dass** der Mindestabstand (a) zwischen der Schüttgutoberfläche und dem Füllstandsensor (5) zur Berechnung der durch eine trichterförmige Schüttgutsenke (10) bestimmten Schüttgutrestmenge (11) der Behälterhöhe zwischen dem Austragstrichter (3) und dem Füllstandsensor (5) entspricht.

4. Verfahren nach Anspruch 2 oder 3, **dadurch gekennzeichnet, dass** bei einem gemessenen Abstand zwischen der Schüttgutoberfläche und dem Füllstandsensor (5) kleiner als der vorgegebene Mindestabstand (a) zur Berechnung der durch eine trichterförmige Schüttgutsenke (10) bestimmten Schüttgutrestmenge (11) die Berechnung der Schüttgutmenge in Abhängigkeit von einer Behälterbewegung nach der Füllung des Behälters (1) mit Schüttgut (7) mithilfe der durch den Füllstandsensor (5) gemessenen Abstände anhand der Daten der Behälterabmessungen, des Schüttwinkels (a) und eines abgespeicherten, auf Messabstände bezogenen Verlaufs der Oberflächenform des Schüttguts (7) während des Schüttgutaustrags erfolgt.
